Europäisches Patentamt
European Patent Office
Office européen des brevets

(11) Veröffentlichungsnummer: **0 041 605**
**A1**

(12)
# EUROPÄISCHE PATENTANMELDUNG

(21) Anmeldenummer: **81103002.2**

(22) Anmeldetag: **18.04.81**

(51) Int. Cl.$^3$: **D 06 P 3/60**
C 09 B 29/20
//C09B43/124

(30) Priorität: **16.05.80 DE 3018713**

(43) Veröffentlichungstag der Anmeldung:
**16.12.81 Patentblatt 81/50**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Loeffler, Hermann**
**Haydnstrasse 23**
**D-6720 Speyer(DE)**

(72) Erfinder: **Lotsch, Wolfgang, Dr.**
**Stettiner Strasse 32**
**D-6711 Beindersheim(DE)**

(54) **Verfahren zum Färben und/oder Bedrucken von cellulosehaltigem Textilmaterial und neue Farbstoffe.**

(57) Die Erfindung betrifft ein Verfahren zum Färben und/oder Bedrucken von cellulosehaltigem Textilmaterial, das *dadurch gekennzeichnet* ist, daß man Farbstoffe der allgemeinen Formel I

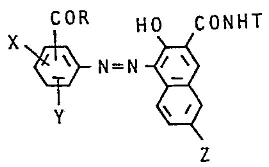

verwendet, in der

R einen Rest der Formel OR$^1$ oder 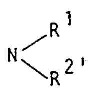

R$^1$ gegebenenfalls durch Sauerstoff unterbrochenes Alkyl, Aralkyl oder Acyloxyalkyl oder gegebenenfalls substituiertes Cyclohexyl oder Phenyl,

R$^2$ Wasserstoff oder einen Rest R$^1$,

X Wasserstoff oder Nitro,

Y Wasserstoff, Fluor, Chlor, Brom, Methyl, Trifluormethyl, Äthyl, Methoxy oder Äthoxy,

Z Wasserstoff, Methyl, Äthyl, Methoxy oder Äthoxy und

T gegebenenfalls weiter durch Chlor, Brom, Methyl, Äthyl, Methoxy oder Äthoxy substituiertes Alkoxy- oder Phenoxyphenyl oder Naphthyl bedeuten.

EP 0 041 605 A1

COMPLETE DOCUMENT

Croydon Printing Company Ltd.

**Verfahren zum Färben und/oder Bedrucken von cellulosehaltigem Textilmaterial und neue Farbstoffe**

Die Erfindung betrifft ein Verfahren zum Färben und/oder Bedrucken von cellulosehaltigem Textilmaterial, das <u>dadurch gekennzeichnet</u> ist, daß man Farbstoffe der allgemeinen Formel I

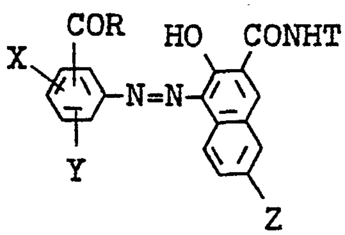

verwendet, in der

R einen Rest der Formel $OR^1$ oder 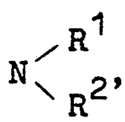,

$R^1$ gegebenenfalls durch Sauerstoff unterbrochenes Alkyl, Aralkyl oder Acyloxyalkyl oder gegebenenfalls substituiertes Cyclohexyl oder Phenyl,

$R^2$ Wasserstoff oder einen Rest $R^1$,

X Wasserstoff oder Nitro,

Y Wasserstoff, Fluor, Chlor, Brom, Methyl, Trifluormethyl, Äthyl, Methoxy oder Äthoxy,

Z Wasserstoff, Methyl, Äthyl, Methoxy oder Äthoxy und

T gegebenenfalls weiter durch Chlor, Brom, Methyl, Äthyl, Methoxy oder Äthoxy substituiertes Alkoxy- oder Phenoxyphenyl oder Naphthyl bedeuten.

Bg/L

Die Reste $R^1$ haben in der Regel 1 bis 18 C-Atome bei den Estern und $R^1$ und $R^2$ zusammen bei den Amiden 1 bis 16 C-Atome, vorzugsweise 3 bis 16 C-Atome. Einzelne Reste $R^1$ sind beispielsweise:

$CH_3$, $C_2H_5$, $C_3H_7$-(n), $CH(CH_3)_2$, $C_4H_9$-(n), $CH_2-CH(CH_3)_2$, $C_4H_8Cl$, $C_5H_{11}$-(n), $CH_2-C(CH_3)_3$, 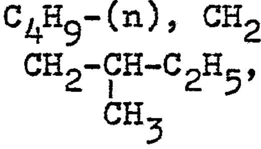, $C_2H_4-CH(CH_3)_2$,

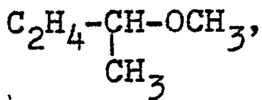, $C_6H_{13}$-(n), 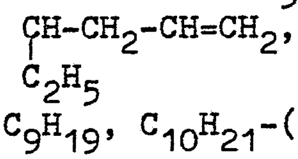, $C_7H_{15}$, $CH(C_3H_7)_2$,

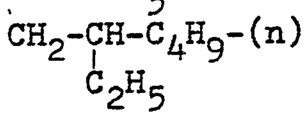, $C_8H_{17}$, $C_9H_{19}$, $C_{10}H_{21}$-(n), $C_{10}H_{21}$-(i),

$C_{12}H_{25}$, $C_{13}H_{27}$, $C_{16}H_{33}$, $C_{18}H_{37}$, 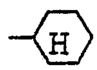, 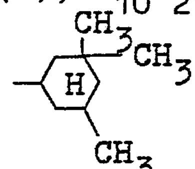,

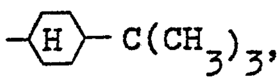, 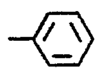, 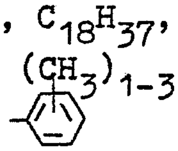, 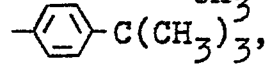,

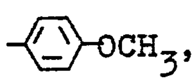, 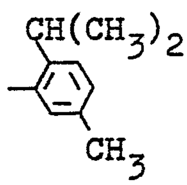, 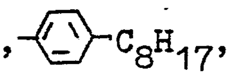, $C_2H_4-OCH_3$, $C_2H_4-O-C_2H_5$,

$C_2H_4-O-C_4H_9$, 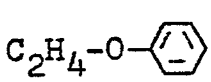, 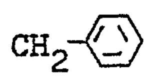, 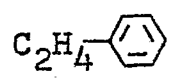, 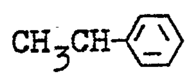,

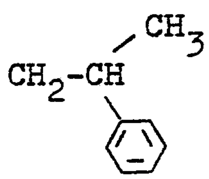, 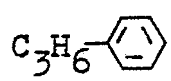, $(C_2H_4O)_2CH_3$, $(C_2H_4O)_2C_2H_5$,

$(C_2H_4O)_2C_4H_9$, $(C_2H_4O)_3C_2H_5$, $(C_2H_4O)_3C_4H_9$, $C_2H_4-O-COCH_3$,

$C_2H_4-O-CO-C_2H_5$, $C_2H_4-O-CO-CH(CH_3)_2$, $C_2H_4-O-COC_4H_9$,

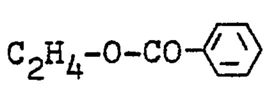, 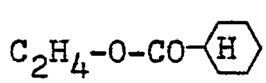, $C_2H_4-O-CO-OCH_3$,

$C_2H_4$-O-CO-O$C_2H_5$, $C_2H_4OCOOC_2H_4OCH_3$, $C_2H_4OCOOC_2H_4OC_2H_5$, $C_2H_4OCOOCH(CH_3)_2$, $C_2H_4OCOOCH_2CH(C_2H_5)C_4H_9$, $C_2H_4OCOO$- 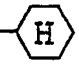, $C_2H_4OCOO$- 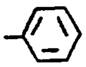, $C_2H_4OCOO$- 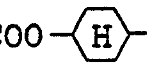 - $C(CH_3)_3$, $C_2H_4OCONHCH_3$, $C_2H_4OCONHCH(CH_3)_2$, $C_2H_4OCONHC_4H_9$-(n), $C_2H_4OCONHCH(CH_3)C_2H_5$, $C_2H_4OCONH$- 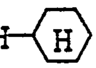, $C_2H_4OCONH$- 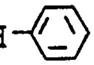 und dessen am Phenylkern mit Halogen, Alkyl und Trifluormethyl substituierte Derivate sowie die entsprechenden Reste, welche die Gruppe -$C_2H_4$- zwei- oder dreimal enthalten.

Reste T sind im einzelnen z. B.

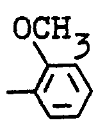, 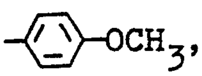, 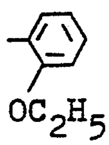, 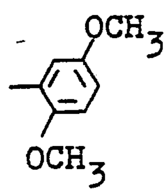 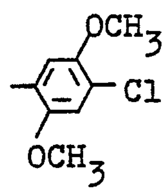,

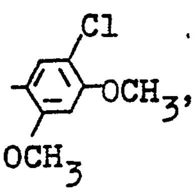, 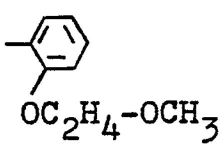, 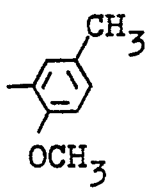, 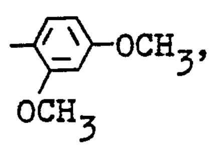, 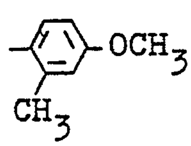,

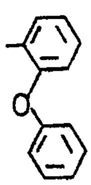, 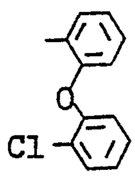, 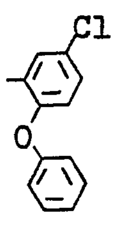, 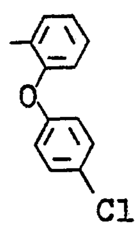, 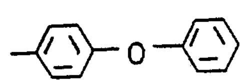,

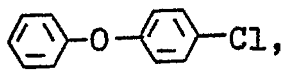, 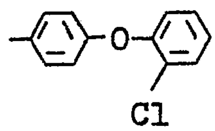, 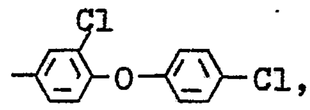,

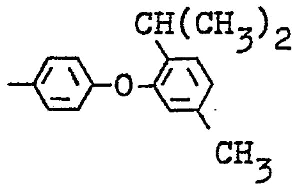, 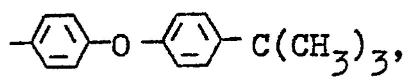, 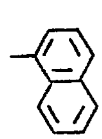, 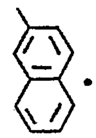.

Als Verfahren zur Applikation der Farbstoffe der Formel I eignen sich insbesondere die in der deutschen Patentschrift 1 811 796 und den deutschen Patentanmeldungen DE-OS 25 24 243 und 25 28 743 sowie der Patentanmeldung P 28 55 188, 4 beschriebenen Verfahren.

Zur Herstellung der Verbindungen der Formel I kann man z. B, eine Diazoverbindung von Aminen der Formel

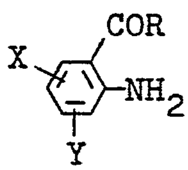

mit einer Kupplungskomponente der Formel

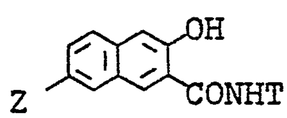

umsetzen.

Einzelheiten der Herstellung und der Applikation können den Beispielen entnommen werden, in denen sich Angaben über Teile und Prozente, sofern nicht anders vermerkt, auf das Gewicht beziehen.

Von besonderer Bedeutung für das erfindungsgemäße Verfahren sind Farbstoffe der allgemeinen Formel

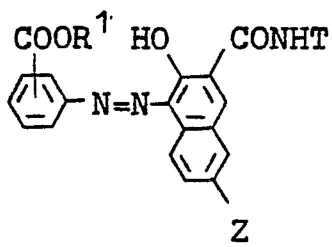 .

Besonders bevorzugt sind dabei für $R^1$ $C_2$- bis $C_{16}$-Alkyl und Aralkyl, das noch durch Sauerstoff unterbrochen sein kann. Einzelne bevorzugte Reste $R^1$ sind z. B.:

$C_2H_5$, $C_3H_7(i)$, $C_4H_9$, $CH_2\text{-}CH(CH_3)\text{-}C_2H_5$, $C_2H_4CH(CH_3)OCH_3$, $C_2H_4CH(C_2H_5)OCH_3$, $C_9H_{19}$, $C_{10}H_{21}$, $C_{12}H_{25}$, $C_2H_4OCH_3$, $C_2H_4OC_2H_5$, $C_2H_4OC_4H_9$, $C_2H_4O$-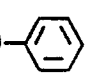 , $CH_2$-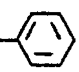 , $C_2H_4$-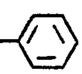 , $(C_2H_4O)_2C_2H_5$, $(C_2H_4O)_2C_4H_9$.

Z ist vorzugsweise Methoxy und insbesondere Wasserstoff.

Bevorzugte Reste T sind beispielsweise:

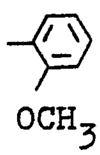 , 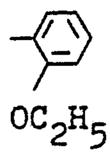 , 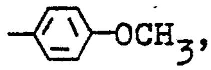 , 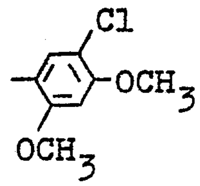 , 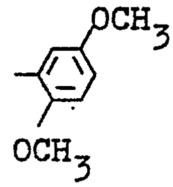 ,

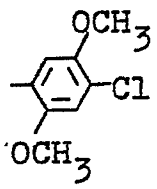 , 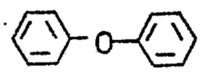 , 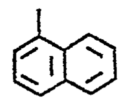 .

Die Erfindung betrifft weiterhin neue Verbindungen der allgemeinen Formel I, bei denen Y Wasserstoff und X Wasserstoff oder eine Nitrogruppe in p-Stellung zur Azobrücke bedeuten, COR in o-Stellung zur Azobrücke steht und R = $OR^1$ ist, wobei $R^1$ $C_5$- bis $C_{18}$-Alkyl, durch $C_2$- bis $C_4$-Alkoxy, Phenoxy oder Phenyl substituiertes $C_1$- bis $C_3$-Alkyl, $C_5$- bis $C_{10}$-Polyalkoxyalkyl, Cyclohexyl oder gegebenenfalls substituiertes Phenyl bedeutet. In den neuen Farbstoffen steht $R^1$ beispiesweise für:

$C_5H_{11}$-(n), $CH_2C(CH_3)_3$, $CH_2CH(CH_3)C_2H_5$, $C_2H_4CH(CH_3)_2$, $C_2H_4CH(CH_3)OCH_3$, $C_6H_{13}$-(n), 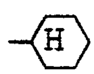 , 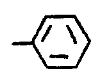 , $CH(C_2H_5)CH_2CH{=}CH_2$, $C_7H_{15}$-(n), $CH(C_3H_7)_2$, $CH_2CH(CH_3)-C_4H_9$, $C_8H_{17}$-(n), $C_9H_{19}$-(n) und -(i), $C_{10}H_{21}$-(n) und -(i), $C_{12}H_{25}$-(n), $C_{13}H_{27}$-(n) und -(i), $C_{16}H_{33}$, $C_{18}H_{37}$, $C_2H_4OC_2H_5$, $C_2H_4OC_4H_9$, $(C_2H_4O)_2C_2H_5$, $(C_2H_4O)_2C_4H_9$, $C_2H_4O$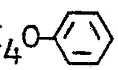 , $CH_2$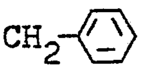 ,

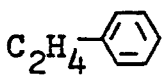 oder 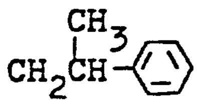 .

## Beispiel 1

14 Teile Anthranilsäure-n-decylester werden in geschmolzener Form und bei guter Rührung in ein Gemisch aus 50 Raumteilen Wasser, 30 Raumteilen 30 %iger Salzsäure und 2,5 Teilen eines Adduktes aus Spermölalkohol und Äthylenoxid im Verhältnis 1:25 eingegossen. Nach Rühren über Nacht wird die Dispersion mit 30 Teilen Eis gekühlt und in ca. 15 Minuten bei 0 - 5 °C mit 15 Raumteilen einer 3,33-normalen Natriumnitritlösung versetzt. Die so durch zweistündiges Rühren erhaltene Lösung des Diazoniumsalzes befreit man von überschüssiger salpetriger Säure und läßt sie bei 5 - 10 °C zu einer warm bereiteten Lösung von 16,2 Teilen 2-Oxynaphthoesäure-2'-methoxy-anilid und 60 Teilen Natriumacetat in 300 Raumteilen Eisessig und 30 Raumteilen Wasser zufließen. Nach Rühren über Nacht wird der gebildete Farbstoff der Formel

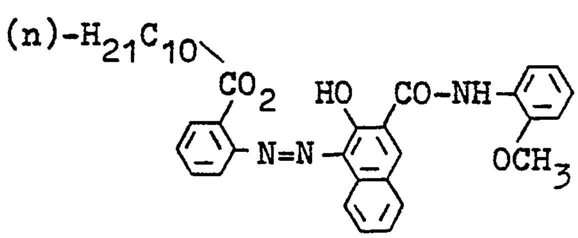

abgesaugt, mit heißem Wasser gewaschen und bei 80 °C getrocknet.

Ein Gewebe aus 65 Teilen Polyesterfasern und 35 Teilen mercerisierter Baumwolle wird mit einer Flotte imprägniert, die 10 g/l einer 20 %igen wäßrigen Zubereitung obigen Farbstoffes und 80 g/l eines Quell- und Farbstofflösemittels, bestehend aus 80 Teilen eines Polyäthylenglykols mit einem Molekulargewicht von 1500 und 20 Teilen eines Umsetzungsproduktes aus 1 Mol Hexamethylendiamin und 15 Mol Äthylenoxid, enthält. Der pH-Wert der Flotte wird mit Zitronensäure auf 6 eingestellt. Das behandelte Gewebe wird 60 Sekunden bei 120 °C getrocknet und zur Fixierung des Farbstoffes weitere 60 Sekunden einer Temperatur von 215 °C ausgesetzt. Hierauf wird kalt und warm gespült und 20 Minuten in Gegenwart eines handelsüblichen Waschmittels geseift. Man erhält eine scharlachrote Färbung mit guten Licht-, Wasch-, Thermofixier- und Reibechtheiten.

Beispiel 2

Verwendet man unter den Herstellungsbedingungen des Beispiels 1 als Kupplungskomponente das 2-Oxynaphthoesäure-2'-äthoxy-anilid, so wird der Farbstoff der Formel

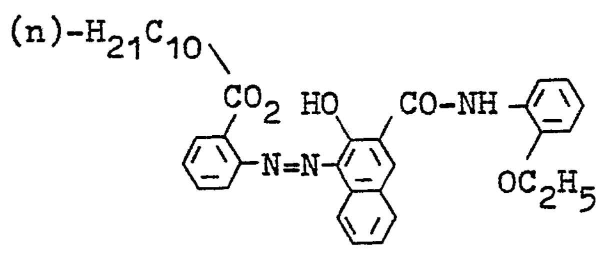

erhalten.

Mit einer Zubereitung, bestehend aus 10 Teilen dieses Farbstoffes, 100 Teilen des Umsetzungsproduktes aus Polyäthylenoxid vom Molekulargewicht 300 mit Borsäure im Molverhältnis 3:1, 30 Teilen Ölsäurediäthanolamid und 860 Teilen einer 3 %igen Alginatverdickung wird ein Mischgewebe aus 65 Teilen Polyesterfasern und 35 Teilen mercerisierter Baumwolle bedruckt. Man trocknet den Druck bei 110 °C und fixiert mit Heißdampf bei 185 - 190 °C. Nach dem Kaltspülen und dem Seifen bei 100 °C mit handelsüblichen Waschmitteln wird ein scharlachfarbener Druck auf weißem Fond erhalten, der sich durch gute Licht-, Wasch- und Lösungsmittelechtheit auszeichnet.

Beispiel 3

Ein Gewebe aus 65 Teilen Polyester-Fasern und 35 Teilen mercerisierter Baumwolle wird mit einer Färbeflotte imprägniert, die 20 g/l einer 20 %igen Zubereitung des Farbstoffs aus Beispiel 1 und als Quell- und Farbstofflösungsmittel 60 g/l einer Mischung aus 1 Teil eines Umsetzungsproduktes aus 1 Mol i-Octylphenol und 14 Mol Äthylenoxid und 2 Teilen eines Umsetzungsproduktes aus 1 Mol Piperazin und 16 Mol Äthylenoxid enthält. Der pH-Wert der Flotte wird mit Glutarsäure auf 6 eingestellt. Das Gewebe wird 60 Sekunden bei 120 °C getrocknet und anschließend der Farbstoff 30 Sekunden bei 225 °C fixiert. Dann wird kalt und warm gespült und bei 100 °C in Gegenwart eines handelsüblichen Waschmittels gewaschen. Man erhält ein scharlachfarbenes Gewebe mit guten Wasch-, Licht-, Thermofixier- und Reibechtheiten.

Beispiel 4

Ein Mischgewebe aus Polyester/Baumwolle (Gewichtsverhältnis 50:50) wird mit einer wäßrigen Flotte imprägniert, die 20 g/l einer 20 %igen Zubereitung des Farbstoffes aus Beispiel 2 und als Quell- und Farbstofflösungsmittel 50 g/l einer Mischung aus 80 Teilen eines Polyäthylenglykols mit einem Molekulargewicht von 600 und 20 Teilen eines Umsetzungsproduktes aus 1 Mol Triäthanolamin und 14 Mol Äthylenoxid enthält. Der pH-Wert der Flotte wird mit Glutarsäure auf 7 eingestellt. Es wird 60 Sekunden bei 120 °C getrocknet und anschließend 90 Sekunden bei 210 °C erhitzt. Dann wird kalt und warm gespült und 5 Minuten bei 100 °C in Gegenwart eines handelsüblichen Waschmittels gewaschen. Man erhält eine rotorange Färbung mit guten Echtheiten.

Beispiel 5

Unter Verwendung von 10,5 Teilen Anthranilsäure-2'-äthoxyäthylester als Diazokomponente und 21,0 Teilen 2-Oxy-6-methoxy-naphthoesäure-2',5'-dimethoxy-4'-chloranilid als Kupplungskomponente wurde unter den Herstellungsbedingungen des Beispiels 1 der Farbstoff der Formel

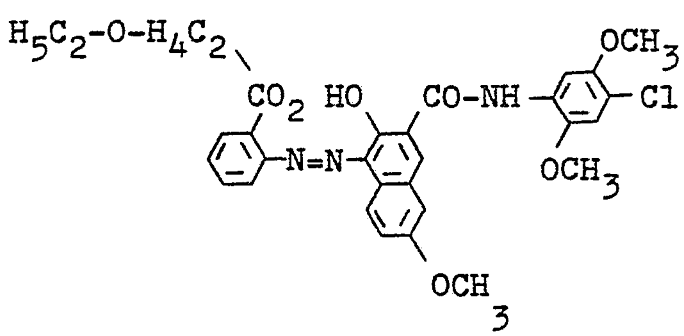

erhalten. Ein Gewebe aus 67 Teilen Polyesterfasern und 33 Teilen Baumwolle (mercerisiert) wurde mit einer Flotte imprägniert, die 100 g/l einer Mischung aus 80 Teilen eines Borsäureesters von Polyäthylenglykol (Molgewicht etwa 800) im Molverhältnis 1:3 und 20 Teilen Äthylendiamin, umgesetzt mit 35 Mol Äthylenoxid, enthielt. Anschließend wurde 15 Minuten bei 60 bis 70 °C getrocknet.

Auf das Substrat wurde folgende Druckpaste gedruckt:

| | | |
|---|---|---|
| 500 | Teile | wäßrige Stärkeäther-Verdickung (10 %) |
| 2 | Teile | Zitronensäure |
| 10 | Teile | m-nitrobenzolsulfonsaures Natrium |
| 50 | Teile | obigen Farbstoffes |
| 338 | Teile | Wasser. |

Nach der Fixierung und dem Nachwaschen wurde ein blaustichig roter Druck mit guten Echtheiten erhalten.

Beispiel 6

Wird unter den Herstellungsbedingungen des Beispiels 1 die Kupplungskomponente durch 19,7 Teile 2-Oxynaphthoesäure-2',5'-dimethoxy-4'-chlor-anilid ersetzt, so erhält man den Farbstoff der Formel

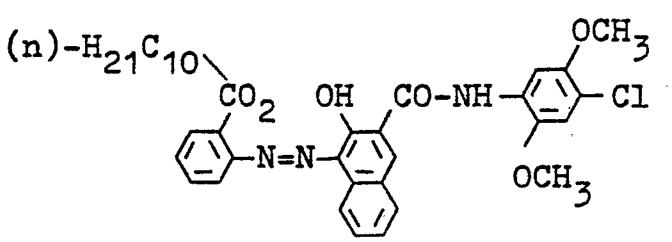

Man bedruckt ein Mischgewebe aus Polyester/Baumwolle (65 : 35) mit einer Paste, die aus 20 Teilen dieses Farbstoffes, 100 Teilen Polyäthylenoxid vom Molekulargewicht 350, 30 Teilen Ölsäurediäthanolamid und 840 Teilen einer 10 %igen Alginatverdickung besteht. Man trocknet das bedruckte Material bei 100 °C und fixiert danach in 60 Sekunden mit Heißluft bei 190/215 °C. Der Druck wird sodann kalt und warm gespült und bei 100 °C mit einem handelsüblichen Waschmittel geseift.

Man erhält so einen orangefarbenen Druck mit guten Echtheiten.

Beispiel 7

Bei Einsatz von 12,1 Teilen Anthranilsäure-2'-phenyläthylester und 19,7 Teilen 2-Oxynaphthoesäure-2',4'-dimethoxy-5'-chloranilid wird unter den Herstellungsbedingungen des Beispiels 1 der Farbstoff der Formel

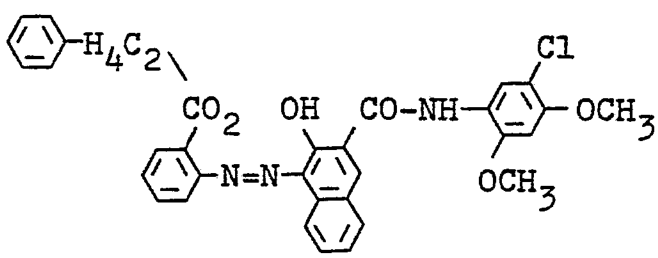

erhalten.

Man bedruckt ein Mischgewebe aus Polyester/Baumwolle (Gewichtsverhältnis 65 : 35) mit einer Paste, die aus 10 Teilen des obigen Farbstoffes, 120 Teilen des Umsetzungsproduktes aus Polyäthylenoxid vom Molekulargewicht 300 mit Borsäure im Molverhältnis 3 : 1 und 870 Teilen einer 10 %igen Alginatverdickung besteht. Der Druck wird bei 105 °C getrocknet und 6 Minuten bei 180 °C mit Heißdampf behandelt. Darauf spült man zunächst mit kaltem Wasser, seift den Druck dann bei 80 °C, spült kalt und trocknet. Man erhält einen licht- und waschechten gelbstichig roten Druck mit guten Echtheiten.

Beispiel 8

16,3 Teile 5-Nitro-anthranilsäure-2"-butoxy-2'-äthoxyäthylester werden in 150 Teilen 100 %iger Essigsäure und 50 Teilen Propionsäure bei 0 - 5 °C verrührt und tropfenweise mit 16 g 42 %iger Nitrosylschwefelsäure versetzt. Nach etwa 20minütigem Rühren bei dieser Temperatur zerstört man überschüssige salpetrige Säure mit Harnstoff oder Amidosulfonsäure und läßt die Diazoniumsalzlösung in ein vorbereitetes Gemisch aus 19,6 Teilen 2-Oxynaphthoesäure-2',4'-dimethoxy-5'-chloranilid, 300 Raumteilen 100 %iger Essigsäure, 150 Raumteilen N-Methylpyrrolidon und 50 Teilen wasserfreiem Natriumacetat einfließen. Nach ca. 3 stündigem Rühren unter Erwärmung auf Raumtemperatur ist die Kupplung beendet. Der durch Absaugen isolierte Farbstoff der Formel

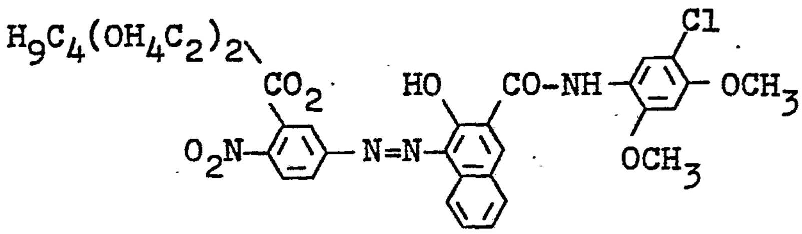

färbt unter den Bedingungen des Beispiels 2 ein Gemisch aus Baumwolle und Polyester (35 : 65) in rotstichig braunem Ton mit guten Licht-, Thermofixier-, Lösungsmittel- und Reibechtheiten.

Beispiel 9

10,5 Teile Anthranilsäure-2'-äthoxy-äthylester als Diazokomponente mit 19,5 Teilen 2-Oxynaphthoesäure-4'-phenoxy-anilid unter den Herstellungsbedingungen des Beispiels 1 kombiniert, ergeben den Farbstoff der Formel

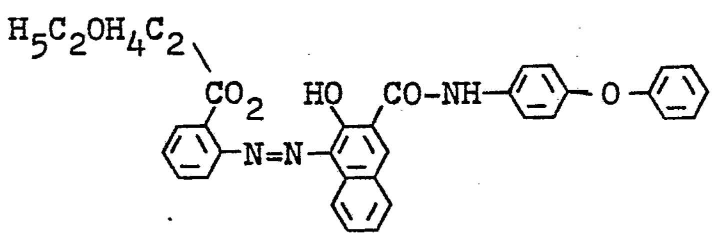

,

der nach den Applizierbedingungen des gleichen Beispiels einen gelbstichig roten Druck mit guten Echtheiten liefert.

Die Applikationsverfahren der beschriebenen Farbstoffe können durch Verwendung der in den deutschen Patentanmeldungen 25 24 243, 25 28 743 und 25 55 188,4 aufgeführten Quell- und Farbstofflösemittel sowie deren Mischungen in den Grenzen der dort angegebenen Konzentrationen weitgehend variiert werden.

Solche Druck- und Färbeverfahren auf die nachfolgend beschriebenen Farbstoffe angewandt, liefern Drucke und Färbungen mit ähnlichem Echtheitsniveau.

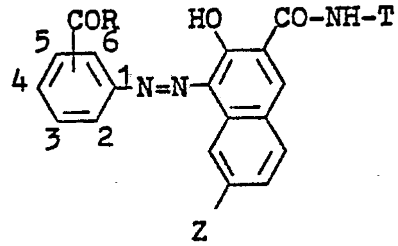

| Bsp. | R | T | Z | Farbton auf BW/ PES-Mischgewebe |
|---|---|---|---|---|
| 10 | 2-$OC_{10}H_{21}$-(n) | 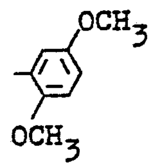 | H | orange |
| 11 | " | 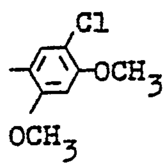 | H | gelbbraun |
| 12 | " | 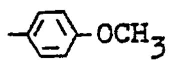 | H | rotorange |
| 13 | " | 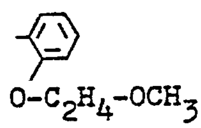 | H | rotorange |
| 14 | " | 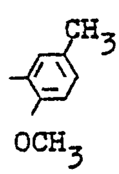 | H | orange |

| Bsp. | R | T | Z | Farbton auf PES/ BW-Mischgewebe |
|---|---|---|---|---|
| 15 | 2-$OC_{10}H_{21}$-(n) | 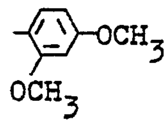 | H | rotorange |
| 16 | " | 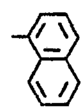 | H | " |
| 17 | " | 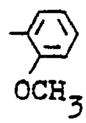 | $OCH_3$ | rot |
| 18 | " | 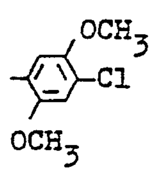 | " | " |
| 19 | " | 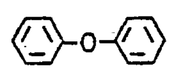 | H | rotorange |
| 20 | 2-$OC_{10}H_{21}$-(i) | 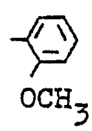 | H | orange |
| 21 | " | 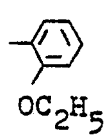 | H | " |

| Bsp. | R | T | Z | Farbton auf PES/ BW-Mischgewebe |
|---|---|---|---|---|
| 22 | $2-OC_{10}H_{21}-(i)$ | 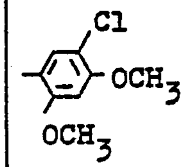 | H | gelbbraun |
| 23 | " | 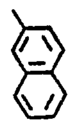 | H | rotorange |
| 24 | " | 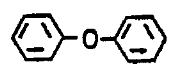 | H | " |
| 25 | " | 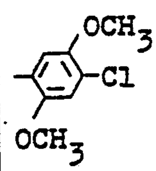 | $OCH_3$ | rot |
| 26 | " | 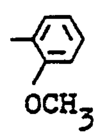 | " | " |
| 27 | $2-O-CH_2-\overset{C_2H_5}{\overset{\vert}{C}}H-C_4H_9$ | " | H | orange |
| 28 | " | 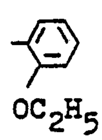 | H | " |

| Bsp. | R | T | Z | Farbton auf PES/ BW-Mischgewebe |
|---|---|---|---|---|
| 29 | $C_2H_5$<br>2-O-$CH_2$-CH-$C_4H_9$ | 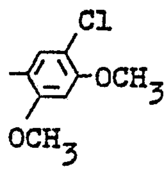 | H | gelbbraun |
| 30 | " | 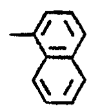 | H | rotorange |
| 31 | " | 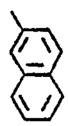 | H | " |
| 32 | " | 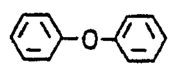 | H | orange |
| 33 | " | 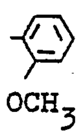 | $OCH_3$ | rot |
| 34 | 2-$OC_9H_{19}$-(n) | " | H | orange |
| 35 | " | 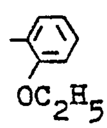 | H | " |

| Bsp. | R | T | Z | Farbton auf PES/ BW-Mischgewebe |
|---|---|---|---|---|
| 36 | 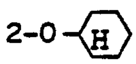 | 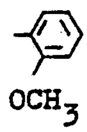 | H | orange |
| 37 | 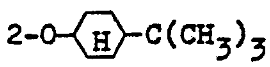 | " | H | " |
| 38 | 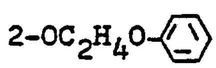 | " | H | " |
| 39 | " | 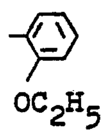 | H | " |
| 40 | " | 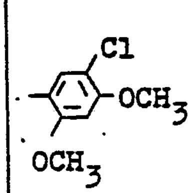 | H | rotorange |
| 41 | " | 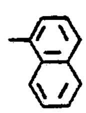 | H | " |
| 42 | " | 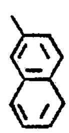 | H | " |
| 43 | " | 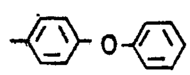 | H | " |

| Bsp. | R | T | Z | Farbton auf PES/ BW-Mischgewebe |
|---|---|---|---|---|
| 44 | 2-$OC_2H_4$-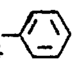 | 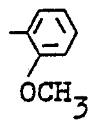 | H | orange |
| 45 | " | 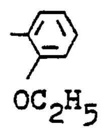 | H | " |
| 46 | " | 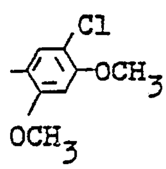 | H | gelbbraun |
| 47 | " | 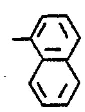 | H | rotorange |
| 48 | " | 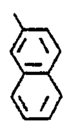 | H | " |
| 49 | 2-$OC_2H_4OC_2H_5$ | 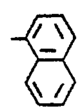 | H | " |
| 50 | " | 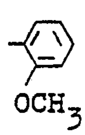 | H | orange |

| Bsp. | R | T | Z | Farbton auf PES/ BW-Mischgewebe |
|---|---|---|---|---|
| 51 | 2-O-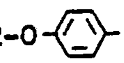-C(CH$_3$)$_3$ | 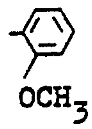 | H | orange |
| 52 | " | 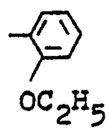 | H | " |
| 53 | 2-OCH(C$_3$H$_7$)$_2$ | " | H | " |
| 54 | " | 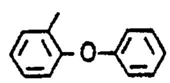 | H | " |
| 55 | " | 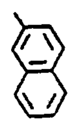 | H | rotorange |
| 56 | 2-OC$_2$H$_5$ | 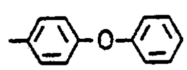 | H | " |
| 57 | " | 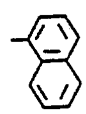 | H | " |
| 58 | 2-OCH$_2$-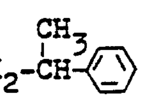 | 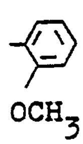 | H | " |

| Bsp. | R | T | Z | Farbton auf PES/ BW-Mischgewebe |
|---|---|---|---|---|
| 59 | 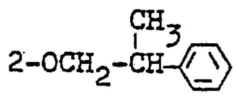 | 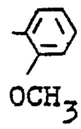 | $OCH_3$ | rot |
| 60 | $2-OC_2H_4-O-C_4H_9$ | 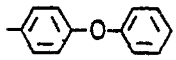 | H | rotorange |
| 61 | " | 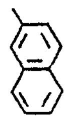 | H | " |
| 62 | 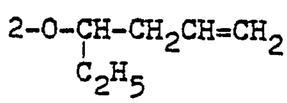 | 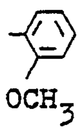 | H | orange |
| 63 | 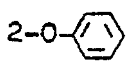 | " | H | " |
| 64 | " | 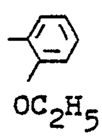 | H | " |
| 65 | $2-OC_2H_4-O-C_2H_5$ | 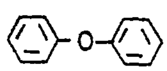 | H | rotorange |
| 66 | " | 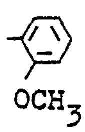 | $OCH_3$ | rot |

| Bsp. | R | T | Z | Farbton auf PES/ BW-Mischgewebe |
|---|---|---|---|---|
| 67 | $2-OC_2H_4-O-C_2H_5$ | 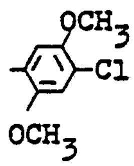 | $OCH_3$ | rot |
| 68 | " | 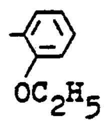 | " | " |
| 69 | $3-O-C_{10}H_{21}-(i)$ | 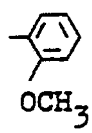 | H | orange |
| 70 | " | 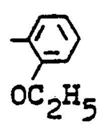 | H | " |
| 71 | " | 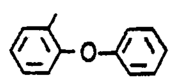 | H | " |
| 72 | $3-O-C_2H_4-O-$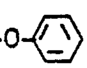 | 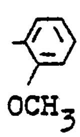 | H | " |
| 73 | " | 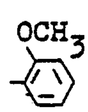 | H | " |

| Bsp. | R | T | Z | Farbton auf PES/ BW-Mischgewebe |
|---|---|---|---|---|
| 74 | $3\text{-}O\text{-}C_2H_4\text{-}O\text{-}C_2H_5$ | 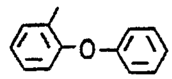 | H | orange |
| 75 | " | 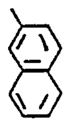 | H | rotorange |
| 76 | $3\text{-}O\text{-}CH_2\text{-}\underset{}{CH}(C_2H_5)\text{-}C_4H_9$ | 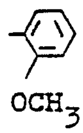 | H | orange |
| 77 | $4\text{-}OC_{10}H_{21}\text{-}(n)$ | " | H | rotorange |
| 78 | " | 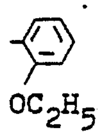 | H | " |
| 79 | " | 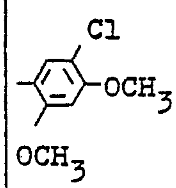 | H | rot |
| 80 | " | 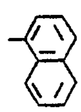 | H | " |

| Bsp. | R | T | Z | Farbton auf PES/ BW-Mischgewebe |
|---|---|---|---|---|
| 81 | $4\text{-}OC_{10}H_{21}\text{-}(n)$ | 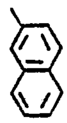 | H | rot |
| 82 | " | 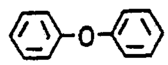 | H | rotorange |
| 83 | " | 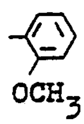 | $OCH_3$ | rot |
| 84 | $4\text{-}OCH_2\text{-}CH(C_2H_5)\text{-}C_4H_9$ | " | H | rotorange |
| 85 | " | " | $OCH_3$ | rot |
| 86 | $4\text{-}OC_9H_{19}\text{-}(i)$ | 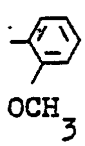 | H | rotorange |
| 87 | 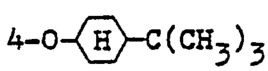 | " | H | " |
| 88 | $4\text{-}OC_2H_4\text{-}OC_2H_5$ | " | H | " |

| Bsp. | R | T | Z | Farbton auf PES/ BW-Mischgewebe |
|---|---|---|---|---|
| 89 | $4-OC_2H_4-OCOCH_3$ | 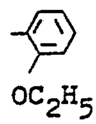 | H | gelb |
| 90 | " | 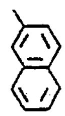 | H | orange |
| 91 | $4-N\begin{matrix} C_4H_9 \\ C_4H_9 \end{matrix}$ | 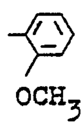 | H | rotorange |
| 92 | " | 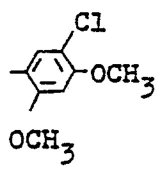 | H | rot |
| 93 | " | 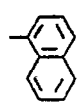 | H | rotorange |
| 94 | $4-NHC_3H_6OC_2H_4O-$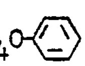 | 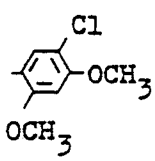 | H | rot |
| 95 | $4-NH-CH_2-\overset{C_2H_5}{\overset{\vert}{C}}HC_4H_9$ | " | H | rot |

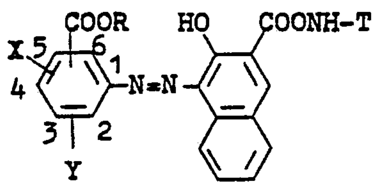

| Bsp. | R | X | Y | T | Farbton auf BW/ PES-Mischgewebe |
|---|---|---|---|---|---|
| 96 | 2-$C_{10}H_{21}$-(i) | H | 3-$CF_3$ | 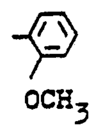 | scharlach |
| 97 | 2-$C_2H_4$-O- | H | " | " | " |
| 98 | 4-$C_{10}H_{21}$-(i) | H | 3-Cl | " | " |
| 99 | 4-$C_2H_4$-O-$C_2H_5$ | H | " | 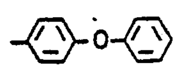 | " |
| 100 | 5-$CH_2$-CH($C_2H_5$)-$C_4H_9$ | H | 2-Cl | 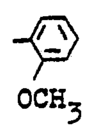 | " |
| 101 | 5-$C_{10}H_{21}$-(i) | H | 4-Cl | " | " |
| 102 | 5-$C_2H_4$O-$C_2H_5$ | H | 2-$OCH_3$ | 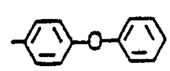 | rot |

| Bsp. | R | X | Y | T | Farbton auf PES/ BW-Mischgewebe |
|---|---|---|---|---|---|
| 103 | 2-$C_2H_4$-O-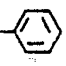 | 4-$NO_2$ | H | 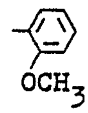 | gelbbraun |
| 104 | " | " | H | 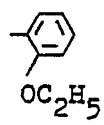 | " |
| 105 | " | " | H | 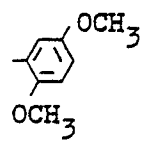 | braunrot |
| 106 | " | " | H | 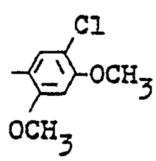 | rotbraun |
| 107 | " | " | H | 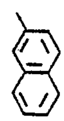 | rot |
| 108 | 2-$C_{10}H_{21}$-(n) | " | H | 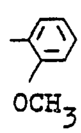 | gelbbraun |

| Bsp. | R | X | Y | T | Farbton auf PES/ BW-Mischgewebe |
|---|---|---|---|---|---|
| 109 | $2-C_{10}H_{21}-(n)$ | $4-NO_2$ | H | 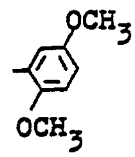 | braunrot |
| 110 | $2-C_2H_4-O-C_2H_5$ | " | H | 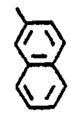 | rot |
| 111 | " | " | H | 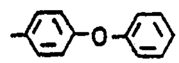 | gelbbraun |
| 112 | $2-C_{10}H_{21}-(i)$ | " | H | 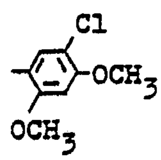 | braun |
| 113 | $2-(C_2H_4O)_2-C_4H_9$ | " | H | 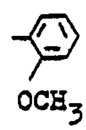 | orange |

## Patentansprüche

1. Verfahren zum Färben und Bedrucken von cellulosehaltigem Textilmaterial, dadurch gekennzeichnet, daß man Farbstoffe der allgemeinen Formel I

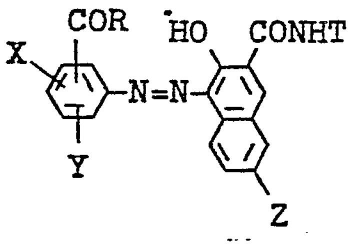

verwendet, in der

R einen Rest der Formel $OR^1$ oder $N{<}^{R^1}_{R^2}$,

$R^1$ gegebenenfalls durch Sauerstoff unterbrochenes Alkyl, Aralkyl oder Acyloxyalkyl oder gegebenenfalls substituiertes Cyclohexyl oder Phenyl,

$R^2$ Wasserstoff oder einen Rest $R^1$,

X Wasserstoff oder Nitro,

Y Wasserstoff, Fluor, Chlor, Brom, Methyl, Trifluormethyl, Äthyl, Methoxy oder Äthoxy,

Z Wasserstoff, Methyl, Äthyl, Methoxy oder Äthoxy und

T gegebenenfalls weiter durch Chlor, Brom, Methyl, Äthyl, Methoxy oder Äthoxy substituiertes Alkoxy- oder Phenoxyphenyl oder Naphthyl bedeuten.

2. Verfahren gemäß Anspruch 1, dadurch gekennzeichnet, daß man Farbstoffe der allgemeinen Formel

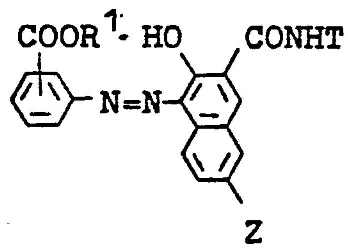

verwendet.

3. Farbstoffe der allgemeinen Formel

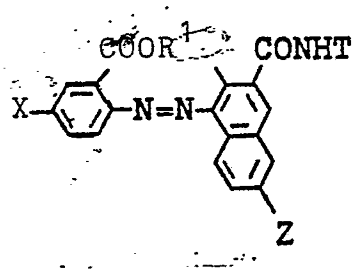

in der

$R^1$ $C_5$- bis $C_{18}$-Alkyl, durch $C_2$- bis $C_4$-Alkoxy, Phenoxy oder Phenyl substituiertes $C_1$- bis $C_3$-Alkyl, $C_5$- bis $C_{10}$-Polyalkoxyalkyl, Cyclohexyl oder gegebenenfalls substituiertes Phenyl ist und

T, X und Z die angegebene Bedeutung haben.

0041605

Europäisches Patentamt

**EUROPÄISCHER RECHERCHENBERICHT**

Nummer der Anmeldung

EP 81 10 3002

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | US - A - 2 120 728 (BONHOTE)<br>* Seite 1, linke Spalte, ganz und von Zeile 5 - Seite 2, linke Spalte, Zeile 34 *<br>-- | 3 | D 06 P 3/60<br>C 09 B 29/20//<br>C 09 B 43/124 |
| | FR - A - 1 085 971 (HOECHST)<br>* Seite 1, linke Spalte, Absätze 1,2; Seite 2, Tabelle. Beispiele 7-12,14-16,25,27 *<br>& DE - C - 942 325<br>-- | 3 | RECHERCHIERTE SACHGEBIETE (Int. Cl.³) |
| A | FR - A - 2 387 315 (BASF)<br>* Seite 1, Zeilen 1-29; Seite 8, Zeilen 14-20 *<br>& DE - A - 2 716 934<br>-- | 1,2 | D 06 P 3/60<br>C 09 B 29/00-<br>29/01<br>29/18-<br>29/20 |
| PX | DE - A - 2 916 484 (BAYER)<br>* Seite 1, ganz; Seite 2, Absatz 1; Seite 30, Beispiele 51-53; Seite 31, Beispiel 76 *<br>-- | 1,2 | |
| PX<br><br><br><br>X | CHEMICAL ABSTRACTS, Band 92, Nr. 20, 19. Mai 1980, Seite 67, Nr. 165199j<br>Columbus, Ohio, U.S.A.<br>& CS - A - 179 543 (MUZIK, FRANTISEK et al.) 15-07-1979<br>* Zusammenfassung *<br>-- | 1 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| PA | EP - A - 0 025 473 (BASF)<br>* Seite 1, Formel I; Seiten 3-6; Beispiele 1,2,9,11 *<br>---- | 3 | |
| X | Der vorliegende Recherchenbericht wurde für alle Patentansprüche erstellt | | &: Mitglied der gleichen Patentfamilie, übereinstimmendes Dokument |

| Recherchenort | Abschlußdatum der Recherche | Prüfer |
|---|---|---|
| Den Haag | 23-09-1981 | GREEN |

EPA form 1503.1 06.78